# EUROPEAN PATENT APPLICATION

(11) **EP 4 687 057 A1**
(43) Date of publication of application: **04.02.2026**
(21) Application number: 25190622.8
(22) Date of filing: 21.07.2025
(51) Int. Cl.: G06F 21/75, G06F 12/00, G11C 7/00, G06F 7/544, G06F 7/58

(54) **RANDOMIZED SEQUENCE FOR ROW AND/OR COLUMN ADDRESSING IN A DIGITAL IN-MEMORY COMPUTATION PROCESSING SYSTEM**

(30) Priority: 29.07.2024 US 202463676663 P; 07.07.2025 US 202519261025
(71) Applicant: STMicroelectronics International N.V., 1228 Plan-les-Ouates, Geneva (CH)
(72) Inventor: CHAWLA, Nitin, 201304 NOIDA (IN); RAWAT, Harsh, 121006 FARIDABAD (IN); AYODHYAWASI, Manuj, 201304 NOIDA (IN)
(74) Representative: Casalonga

(57) **Abstract**

Computational weight data for an in-memory computation operation is stored in memory cells of a memory array. During execution of the in-memory computation operation, the computational weight data is read from the memory array using a randomly selected order of row and/or column access. A digital computation processing circuit receives feature data for the in-memory computation operation and performs a computational operation as a function of the feature data and the read computational weight data. A map signal generated in response to the memory access provides information specifying the randomly scrambled order of access. the digital computation processing circuit uses that information to map the retrieved computational weight data to the feature data when performing the computational operation for the in-memory computation operation.

## Description

### CROSS-REFERENCE TO RELATED APPLICATIONS

This application claims priorities from United States Provisional Application for Patent No. 63/676,663, filed July 29, 2024 and from United States Application for Patent No. 19/261,025, filed July 7, 2025, the contents of which are incorporated herein by reference.

### TECHNICAL FIELD

Embodiments herein relate to the execution of an in-memory computation operation by a digital in-memory computation processing system and, in particular, to the use of a randomized scrambling of the sequence for row and/or column addressing of the digital in-memory computation processing system when executing the in-memory computation operation.

### BACKGROUND

An in-memory computation (IMC) processing system stores information in the bit cells of a memory array and performs calculations at the bit cell level. An example of a calculation performed by an IMC processing system is a multiply and accumulate (MAC) operation where an input array of numbers (referred to as the feature or coefficient data) are multiplied by an array of computational weights stored in the memory and the products are added together to produce an output array of numbers.

By performing these calculations at the bit cell level in the memory, the IMC processing system does not need to move data back and forth between a memory device and a computing device. Thus, the limitations associated with data transfer bandwidth between devices are obviated and the computation can be performed with lower power consumption.

An IMC processing system includes a circuit that utilizes a memory array formed by a plurality of memory cells arranged in a matrix format. Each memory cell is programmed to store a bit of the computational weight data (also referred to as kernel data) for an in-memory computation operation. In an implementation, each bit of the computational weight data has either a logic "1" value or a logic "0" value which is represented, for example, by a logic state programmed into the memory cell.

It is often the case that the computational weight data is highly valuable and proprietary information. Persons of bad intent often try to extract the computational weight data using an extraction technique known in the art as a side channel attack which evaluates power consumption during execution of an in-memory computation operation by the IMC processing system. It is recognized that in neural processing applications utilizing in-memory computation operations, a mostly stationary approach to computational weight data storage is implemented, and because of this the stored computational weight data is static over prolonged periods of time during operation. This makes the stored computational weight data more susceptible to side channel attack extraction.

There is a need in the art to provide the IMC processing system with protections against side channel attack efforts to decode the details of the computational weight data stored in the memory array.

### SUMMARY

In an embodiment, a circuit comprises: a memory array including a plurality of memory cells arranged in a matrix with plural rows and plural columns, each row including at least one word line connected to memory cells in the row, and each column including at least one bit line connected to memory cells in the column; wherein the memory cells store computational weight data for an in-memory computation operation; an input/output circuit for each column comprising a read circuit configured to read the computational weight data from memory cells in the memory array during execution of the in-memory computation operation; an address scrambling circuit configured to randomly scramble an order of addresses used for accessing the memory array to retrieve the computational weight data for the in-memory computation operation from the memory cells; and a digital computation processing circuit configured to receive feature data for the in-memory computation operation and perform a computational operation as a function of the feature data and the retrieved computational weight data.

In an embodiment, a method comprising: storing computational weight data for an in-memory computation operation in a memory array including a plurality of memory cells arranged in a matrix with plural rows and plural columns, each row including at least one word line connected to memory cells in the row, and each column including at least one bit line connected to memory cells in the column; reading the computational weight data from memory cells in the memory array during execution of the in-memory computation operation; wherein reading comprises addressing the memory array; wherein addressing comprises randomly scrambling an order of addresses used for accessing the memory array to retrieve the computational weight data for the in-memory computation operation from the memory cells; and performing a digital computational operation as a function of feature data for the in-memory computation operation and the retrieved computational weight data.

### BRIEF DESCRIPTION OF THE DRAWINGS

For a better understanding of the embodiments, reference will now be made by way of example only to the accompanying figures in which:
Figure 1 is a schematic diagram of a circuit supporting both conventional memory access processing and digital in-memory computation processing;
Figure 2 is a circuit diagram of a 6T static random access memory (SRAM) cell used in the circuit of Figure 1;
Figure 3 is a circuit diagram of an 8T SRAM cell used in the circuit of Figure 1;
Figure 4 shows a block diagram for an embodiment of a column I/O circuit for the memory circuit in Figure 1;
Figure 5 shows a block diagram of a system architecture supporting both digital in-memory computation processing and conventional memory access with column multiplexing;
Figure 6 is a schematic diagram of a portion of the system shown in Figure 5; and
Figures 7A and 7B show block diagrams for an embodiment of the I/O circuit for the memory circuit in Figure 6.

### DETAILED DESCRIPTION OF THE DRAWINGS

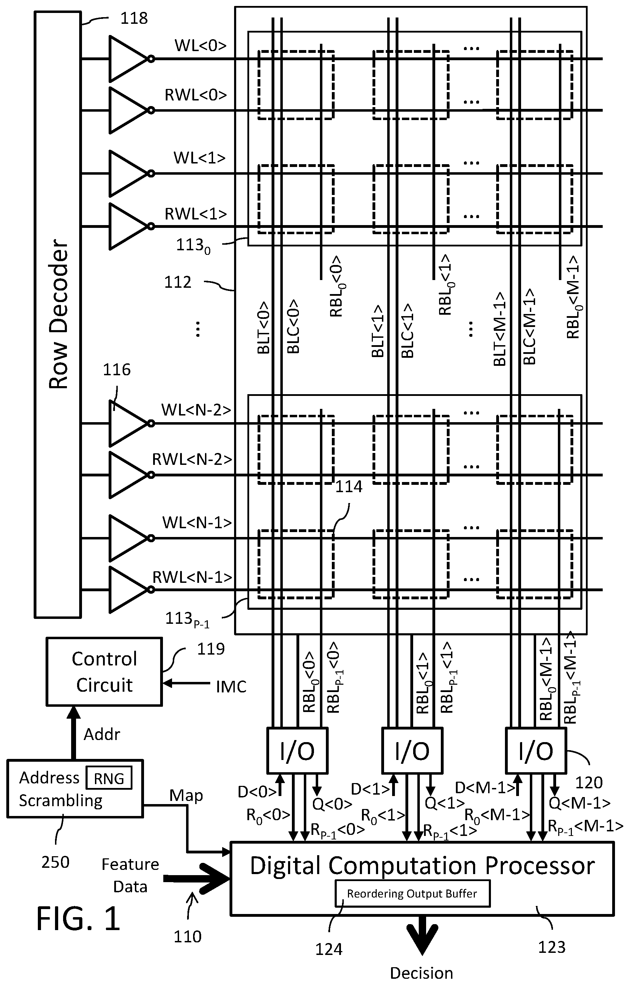

Reference is now made to Figure 1 which shows a block diagram of a circuit 110 supporting both conventional memory access processing and digital in-memory computation processing. The circuit 110 is implemented using a memory circuit which includes a static random access memory (SRAM) array 112 formed by a plurality of SRAM memory cells 114 arranged in a matrix format having N rows and M columns. Each memory cell 114 is programmed to store a bit of data. In conventional memory access processing, the stored data in the memory array 112 can be any desired user data. In digital in-memory computation processing, the stored data in the memory array 112 comprises computational weight or kernel data for a digital in-memory computation operation. In this context, the digital in-memory computation operation is understood to be a form of a high dimensional Matrix Vector Multiplication (MVM) supporting multi-bit weights that are stored in multiple bit cells of the memory. The group of bit cells (in the case of a multibit weight) can be considered as a virtual synaptic element. Each bit of data stored in the memory array, whether user data or weight data, has either a logic "1" or a logic "0" value.

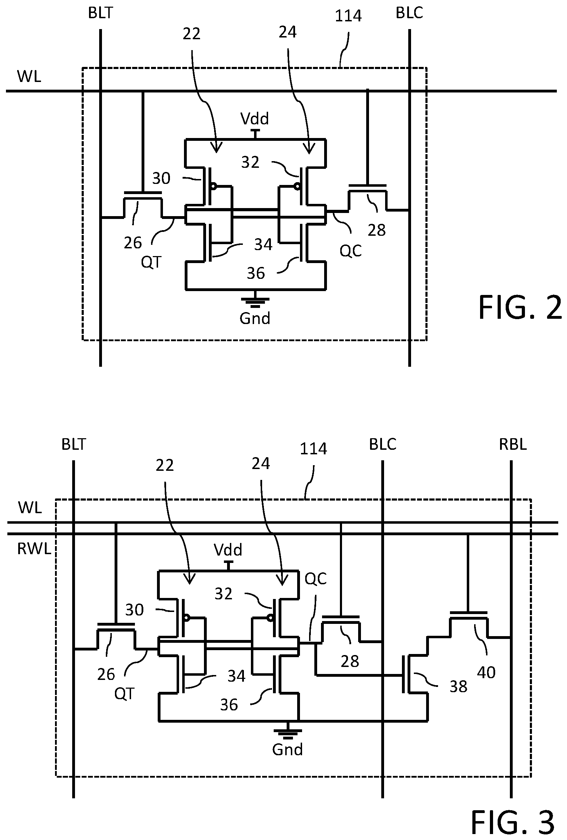

Each SRAM memory cell 114 may comprise a 6T-type memory cell as shown in Figure 2. The cell 114 includes two cross-coupled CMOS inverters 22 and 24, each inverter including a series connected p-channel and n-channel MOSFET transistor pair. The inputs and outputs of the inverters 22 and 24 are coupled to form a latch circuit having a true data storage node QT and a complement data storage node QC which store complementary logic states of the stored data bit. The cell 14 further includes two transfer (passgate) transistors 26 and 28 whose gate terminals are driven by a word line WL. The source-drain path of transistor 26 is connected between the true data storage node QT and a node associated with a true bit line BLT. The source-drain path of transistor 28 is connected between the complement data storage node QC and a node associated with a complement bit line BLC. The source terminals of the p-channel transistors 30 and 32 in each inverter 22 and 24 are coupled to receive a high supply voltage (for example, Vdd) at a high supply node, while the source terminals of the n-channel transistors 34 and 36 in each inverter 22 and 24 are coupled to receive a low supply voltage (for example, ground (Gnd) reference) at a low supply node.

Alternatively, each SRAM memory cell 114 may comprise an 8T-type memory cell as shown in Figure 3. The cell 114 includes two cross-coupled CMOS inverters 22 and 24, each inverter including a series connected p-channel and n-channel MOSFET transistor pair. The inputs and outputs of the inverters 22 and 24 are coupled to form a latch circuit having a true data storage node QT and a complement data storage node QC which store complementary logic states of the stored data bit. The cell 14 further includes two transfer (passgate) transistors 26 and 28 whose gate terminals are driven by a word line WL. The source-drain path of transistor 26 is connected between the true data storage node QT and a node associated with a true bit line BLT. The source-drain path of transistor 28 is connected between the complement data storage node QC and a node associated with a complement bit line BLC. The source terminals of the p-channel transistors 30 and 32 in each inverter 22 and 24 are coupled to receive a high supply voltage (for example, Vdd) at a high supply node, while the source terminals of the n-channel transistors 34 and 36 in each inverter 22 and 24 are coupled to receive a low supply voltage (for example, ground (Gnd) reference) at a low supply node. A signal path between the read bit line RBL and the low supply voltage reference is formed by series coupled transistors 38 and 40. The gate terminal of the (read) transistor 38 is coupled to the complement storage node QC and the gate terminal of the (transfer) transistor 40 is coupled to receive the signal on the read word line RWL.

It will be understood that the circuit 110 may instead use a different type of memory cell, for example any form of a bit cell, storage element or synaptic element producing a deterministic readout arranged in an array. As a non-limiting example, consideration is made for the use of a non-volatile memory (NVM) cell such as, for example, magnetoresistive RAM (MRAM) cell, Flash memory cell, phase change memory (PCM) cell or resistive RAM (RRAM) cell). In the following discussion, focus is made on the implementation using an 8T-type SRAM cell 114, but this is done by way of a non-limiting example, understanding that any suitable memory element could be used (e.g., a binary (two level) storage element or an m-ary (multi-level) storage element).

Each cell 114 includes a word line WL, a pair of complementary bit lines BLT and BLC, a read word line RWL and a read bit line RBL. The SRAM memory cells in a common row of the matrix are connected to each other through a common word line WL and through a common read word line RWL. Each of the word lines (WL and/or RWL) is driven by a word line driver circuit 116 with a word line signal generated by a row decoder circuit 118 during read and write operations. The SRAM memory cells in a common column of the matrix across the whole array 112 are connected to each other through a common pair of complementary (write) bit lines BLT and BLC. The array 112 is segmented into P sub-arrays 113₀ to 113_{P-1}. Each sub-array 113 includes M columns and N/P rows of memory cells 114. The SRAM memory cells in a common column of each sub-array 113 are connected to each other through a local read bit line RBL.

The P local read bit lines RBL₀<x> to RBL_{P-1}<x> from the sub-arrays 113 for the column x in the array 112 are coupled, along with the common pair of complementary bit lines BLT<x> and BLC<x> for the column x in the array 112, to a column input/output (I/O) circuit 120(x). Here, x= 0 to M-1. A data input port (D) of the column I/O circuit 120 receives input data (user or weight data) to be written to an SRAM memory cell 114 in the column through the pair of complementary bit lines BLT, BLC in response to assertion of a word line signal in a conventional memory access mode of operation. A data output port (Q) of the column I/O circuit 120 generates output data read from an SRAM memory cell 14 in the column through the read bit line RBL in response to assertion of a read word line signal in the conventional memory access mode of operation. Additionally, the column I/O circuit 120 further includes P sub-array data output ports R₀ to R_{P-1} to generate output data read from a memory cell 114 on the local read bit line RBL of the corresponding sub-array 113₀ to 113_{P-1}, respectively, in response to the simultaneous assertion of a plurality of read word line signals (one per sub-array 113) in a digital in-memory compute mode of operation.

A digital computation processing circuit 123 performs digital computations on the output data from the sub-array data output ports R as a function of received feature data and generates a decision output for the digital in-memory computation operation. The processing circuit 123 can implement computation logic for the digital signal processing in a number of ways including: full support of Boolean operations (XOR, XNOR, NAND, NOR etc.) and vector operations depending on system and application needs; accumulation pipeline operations where vector multiplication is supported within the memory; and matrix vector multiplication pipeline operations where output from the memory as one vector for the multiply and accumulate (MAC) function. It will be noted that the processing circuit 123 is an integral part of the digital in-memory computation circuit 110.

The computation logic for the digital signal processing performed by processing circuit 123 is closely integrated with the input/output circuits and the sub-array data output ports R₀ to R_{P-1} to support utilization of a wide (for example, P times) vector access. There are a number of figure of merit (FOM) benefits which accrue from this solution including: enabling multi-word access in a same cycle amortizes the common logic toggling power inside the SRAM when wide vector access occurs; the use of sub-arrays 113 can reduce bit line toggling power consumption (i.e., where P word lines are asserted in parallel to access P corresponding sub-arrays); support of both, with the opportunity to toggle between, the conventional memory access mode of operation and the digital in-memory compute mode of operation; and on/off current ratio on the same bitline improves which is a key concern when the circuitry is implemented using fully-depleted silicon-on-insulator (FDSOI) technology where forward body bias is aggressively used.

It will be noted that the circuit 110 presents a conventional SRAM interface through the data input ports D and the data output ports Q in accordance with the conventional memory access mode of operation. In response to an applied memory address (Addr), the circuit supports read (via data output ports Q) and write (via data input ports D) access to a single row of memory cells 114 in the array 112 by the selected assertion of a single word line WL or RWL. The circuit further presents a sub-array processing interface through the sub-array data output ports R₀ to R_{P-1} in accordance with the digital in-memory compute mode of operation. In response to an applied computational address (Addr), the circuit supports simultaneous read (via data output ports R₀ to R_{P-1}) access to a single row of memory cells 114 in each of the sub-arrays 113₀ to 113_{P-1} by the simultaneous assertion of corresponding read word lines RWL. A single computational address can be decoded to select the plural word lines (one per sub-array 113) for assertion, or plural computational addresses can be decoded to select the plural word lines (one per sub-array 113) for assertion. The use plural sub-arrays 113 in this mode enables parallelism supporting very wide access for computation processing without sacrificing density. Advantageously, this digital in-memory compute mode of operation utilizes the resources of the conventional SRAM design with modified control, decoding and input/output circuits (as will be discussed herein in detail) to enable parallel access in the digital in-memory compute mode of operation with additional control to toggle between the conventional memory access mode of operation and the digital in-memory compute mode of operation as needed by the system application. This architecture brings parallelism with usage of the push rule bitcell thus enabling high density/compute density when configured for the in-memory compute mode of operation. Notwithstanding the foregoing, as noted above, usage of other bitcell types may instead be made.

A control circuit 119 controls mode operations of the circuitry within the circuit 110 responsive to the logic state of a control signal IMC. When the control signal IMC is in a first logic state (for example, logic low), the circuit 110 operates in accordance with the conventional memory access mode of operation (for writing data from data input port D to the memory array or reading data from the memory array to data output port Q at a memory address selected by the applied memory access address - Addr). Conversely, when the control signal IMC is in a second logic state (for example, logic high), the circuit 110 operates in accordance with the digital in-memory compute mode of operation (for reading weight data from the memory array to the sub-array data output ports R at multiple memory addresses selected by the applied computational address - Addr).

When the circuit 110 is operating in the conventional memory access mode of operation, the row decoder circuit 118 decodes a received memory access address (Addr), selectively actuates only one word line WL (during write) or one read word line RWL (during read) for the whole array 112 with a word line signal pulse to access a corresponding single one of the rows of memory cells 114. In write, logic states of the data at the input ports D are written by the column I/O circuits 120 through the pairs of complementary bit lines BLT, BLC to the single row of memory cells coupled to the accessed word line WL. In read, the logic states of the data stored in the single row of memory cells coupled to the accessed word line WL are sensed from the read bit lines RBL by the column I/O circuits 120 for output at the data output ports Q.

The foregoing may be better understood by reference to an example. Consider the operation to write the eight bit data word D=<00111101> to a memory access address Addr=A in the memory. The row decoder circuit 118 decodes the access address Addr=A and selectively actuates the word line WL corresponding to that address in memory with a word line signal pulse to access eight memory cells 114 in the corresponding row. The column I/O circuits 120 will apply the eight bits of the data word D=<00111101> through the pairs of complementary bit lines BLT, BLC for storage in the accessed eight memory cells 114.

Now consider the operation to read the eight bit data word which is stored at the same address Addr=A from in the memory. The row decoder circuit 118 again decodes the memory access address Addr=A and selectively actuates the read word line RWL corresponding to that access address with a word line signal pulse to access eight memory cells 114 in the corresponding row. The column I/O circuits 120 sense the eight bits of the data word D=<00111101> for output through the output port Q.

When the circuit 110 is operating in the digital in-memory compute mode of operation, the row decoder circuit 118 decodes a received computation address (Addr), selectively (and simultaneously) actuates one read word line RWL in each sub-array 113 in the memory array 112 with a word line signal pulse to access a corresponding row of memory cells 114 in each sub-array 113. The logic states of the weight data stored in the row of memory cells coupled to the accessed read word line RWL in each sub-array 113 are passed from the read bit lines RBL₀<x> to RBL_{P-1}<x> to the column I/O circuit 120 for output at the corresponding sub-array data output ports R₀ to R_{P-1}.

The foregoing may be better understood by reference to an example. Consider here an in-memory computation operation specifying the computation address Addr=B. The row decoder circuit 118 decodes the computation address Addr=B and selectively actuates, as an example, the first read word line RWL in each sub-array 113 with a word line signal pulse. For the implementation shown in Figure 1, this would mean application of word line signal pulses to the word line RWL<0> of the sub-array 113₀, ...., and word line RWL<N-2> of the sub-array 113_{P-1}. The data word D=< > stored by the memory cells 114 in the first row of the sub-array 113₀ would be passed from the read bit lines RBL₀<0> to RBL₀<M-1> to the column I/O circuit 120 for output at the corresponding sub-array data output ports R₀<0> to R₀<M-1>. Likewise, the data word D=< > stored by the memory cells 114 in the first row of the sub-array 113_{P-1} would be passed from the read bit lines RBL_{P-1}<0> to RBL_{P-1}<M-1> to the column I/O circuit 120 for output at the corresponding sub-array data output ports R_{P-1}<0> to R_{P-1}<M-1>. The digital computation processing circuit 123 then performs digital computations on the output data words D=< > from the sub-array data output ports R as a function of received feature data and generates a decision output for the digital in-memory computation operation.

It will be noted that each sub-array 113 output can be considered as one subtensor/tensor for processing operations. Additionally, multiple sub-arrays 113 outputs can be grouped as a larger tensor. The grouping of sub-array outputs can be made across columns, across rows, or both. Such processing is supported through the configuration and operation of the processing circuit 123.

The architecture shown in Figure 1 presents a number of advantages for digital in-memory computation including: very wide vector access is enabled for supporting high dimensional tensor processing for an artificial neural network (ANN); hyper dimensional computing for artificial intelligence (AI) training and inference workloads is also supported; the computation is deterministic with a wide range of weight data and feature data precisions and number formats permitted for neural network applications (noting that this is a significant differentiation versus analog in-memory computation - which is limited to simplified signed/unsigned integer formats); and the solution is extendable to incorporate additional stochastic compute modes to gain area and power efficiency.

In many instances, the execution of a given in-memory computation operation implicates the sequential accessing by addressing of two or more rows of memory cells 114 in a sub-array 113. For example, a first computation address Addr=B1 is applied for the in-memory computation operation which is decoded by the row decoder circuit 118 to selectively actuate one read word line RWL (for example, for the first row) in each sub-array 113 with a word line signal pulse. The data words D=< > stored by the memory cells 114 in the first row of each sub-array 113 would be passed from the read bit lines RBL to the column I/O circuit 120 for output at the corresponding sub-array data output ports R. The digital computation processing circuit 123 then stores those read data words. A second computation address Addr=B2 is then applied for that same in-memory computation operation which is decoded by the row decoder circuit 118 to selectively actuate another read word line RWL (for example, for the last row) in each sub-array 113 with a word line signal pulse. The data words D=< > stored by the memory cells 114 in the last row of each sub-array 113 would be passed from the read bit lines RBL to the column I/O circuit 120 for output at the corresponding sub-array data output ports R. The digital computation processing circuit 123 then stores those read data words. A digital computation is then performed by the digital computation processing circuit 123 on the stored output read data words D=< > from the two sequential memory access operations for computation addresses B1 and B2 as a function of received feature data in order to generate the decision output for the digital in-memory computation operation.

It is recognized that a mostly stationary approach to computational weight data storage is typically implemented for the memory 112. Because of this, the stored computational weight data is static over prolonged periods of time during operation. This makes the stored computational weight data more susceptible to side channel attack extraction, especially in the context of fixed sequential address accessing of the memory to read the stored computational weight data during execution of the in-memory computation operation.

To address the foregoing concern and provide an effective impediment against side channel attack extraction of the proprietary computational weight data, the circuit 110 implements a randomized memory addressing process during execution of the in-memory computation operation. Row address accessing (i.e., the sequence of addresses applied) is randomly scrambled for each in-memory computation operation by an address scrambling circuit 250. Information about the address scrambling (for example, sequential order information) is provided in a signal (Map) to the digital computation processing circuit 123 so that the computational weight data that is read from each accessed row of the sub-arrays 113 can be properly mapped to the feature data when performing the digital computation to generate the decision output for the digital in-memory computation operation.

Consider again the execution of an in-memory computation operation that implicates the sequential accessing by addressing of two or more rows of memory cells 114 in a sub-array 113. The address scrambling circuit 250 operates to randomize the order of address accessing for the execution of that in-memory computation operation. In the example provided above, the (normal or typical) sequential order in a fixed scheme for accessing by addressing would be application of the first computation address Addr=B1 followed by the application of the second computation address Addr=B2. However, the address scrambling circuit 250 would instead randomize the order of sequential addressing for each instance of execution of an in-memory computation operation. The randomized order may, for example, be specified by a random number output from a random number generator (RNG) circuit.

To better understand the foregoing and its advantages, consideration is made of a more complicated example. In this example, execution of the in-memory computation operation requires the accessing by addressing of four different rows of memory cells 114 in each sub-array 113. Those four rows are associated, respectively, with four computation addresses Addr=B1, B2, B3 and B4 (which, for example, in a typical fixed scheme would utilize the addressing order B1, B2, B3, B4). For each execution of that in-memory computation operation, the address scrambling circuit 250 will generate a randomize sequential order of memory access based on the random number output of the RNG circuit. For example, for one instance of the in-memory computation operation execution, the sequential order of addresses applied to the control circuit 119 by the address scrambling circuit 250 would be, for example, B2, B1, B4, B3 based on one random number output by the RNG circuit. In another instance, based on another random number output by the RNG circuit, the address scrambling circuit 250 would specify the sequential order of addresses applied to the control circuit 119 as, for example, B4, B2, B3, B1. For yet another instance of in-memory computation operation execution, the randomized sequential order of addresses applied to the control circuit 119 by the address scrambling circuit 250 would be, for example, B3, B2, B1, B4 based on yet another random number output by the RNG circuit.

The effect of the foregoing randomized scrambling of the sequential order of addresses for row access in the in-memory computation operation execution is to obfuscate the progression of row selection during execution. This results in a dynamic, non-stationary pattern of memory access to the proprietary computational weight data that enhances data security by making it more difficult to use a side channel attack. The inter-kernel transition density, which is a significant factor in power usage for geometry-transformed computational arrays, is also obfuscated by this randomized row access technique applied by the address scrambling circuit 250.

An effect of this randomized memory (for example, row) access technique is to transform a three-dimensional tensor into a one-dimensional row, which is then strategically mapped to a specific row in the memory array. This geometric transformation can assist in streamlining data flow and optimize memory utilization.

Information concerning the particular randomized sequential order of addresses applied to the control circuit 119 by the address scrambling circuit 250 for the in-memory computation operation is output by the address scrambling circuit 250 via the Map signal. Using the data in the Map signal (which is indicative of the randomized sequential order of addresses applied to the control circuit 119), the digital computation processing circuit 123 is provided with knowledge of the random order with which the computational weight data is being read from the memory for execution of that in-memory computation operation. Using the Map signal provided information, the digital computation processing circuit 123 can operate to properly map the read computational weight data from each accessed row of the sub-arrays 113 to the corresponding feature data when performing the digital computation operation which produces the decision output for the digital in-memory computation operation. **In** the context of the foregoing example, the feature data FD1, FD2, FD3, FD4 can be respectively applied to the computational weight data read from the memory at the corresponding computation addresses Addr=B1, B2, B3 and B4, notwithstanding the fact that the computational weight data was accessed and read from the memory in a different sequential order (for example, the randomized sequence examples of B4, B2, B3, B1 or B2, B1, B4, B3) based on the randomized row access technique applied by the address scrambling circuit 250.

The digital computation processing circuit 123 can thus use the information from the Map signal with a reordering output buffer circuit 124 that possibly repurposes the IMC storage to provide an output indexing mechanism that descrambles the sequential order with which the computational weight data has been read from the rows of the memory for processing in the computational pipeline. This ensures that the final output maintains its reduced dimensionality while being correctly tagged. This also allows subsequent data flow computations to remain unaffected by the randomized sequential order of addressing specified by the circuit 150.

The use of non-overlapping scrambling techniques for addressing the memory across multiple high-cardinality components not only increases the robustness and security of the system, but also adds an extra layer of complexity to the processing operation which safeguards against predictable patterns that could be exploited in a side channel attack.

In an embodiment, it will be noted that the RNG circuit could utilize a pseudorandom binary sequence (PRBS) polynomial for generating from a seed value the random number used to select the particular randomized sequential order of addresses at each execution of the in-memory computation operation.

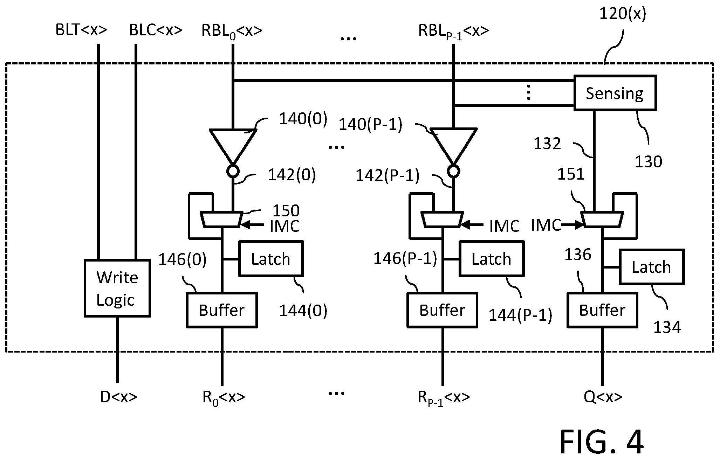

A block diagram of an embodiment for the column I/O circuit 120 is shown in Figure 4. The column I/O circuit 120(x) is coupled to the pair of complementary bit lines BLT<x>, BLC<x> for the column x in the array 112. The bit at the data input port D<x> is passed to the write logic circuit to be written into the selected memory cell 114 through the complementary bit lines BLT<x>, BLC<x>.

The column I/O circuit 120(x) is also coupled to the P local read bit lines RBL₀<x> to RBL_{P-1}<x> from the sub-arrays 113 for the column x in the array 112 through a read logic circuit. A sensing circuit 130 of the read logic circuit is coupled to receive the data on the P local read bit lines RBL₀<x> to RBL_{P-1}<x> and generate a sensed data bit on signal line 132. As an example, the sensing circuit 130 may comprise a logic NAND gate. The sensed data bit is applied to the first input of a multiplexer circuit 151 whose select input receives the control signal IMC. The second input of the multiplexer circuit 151 is coupled to the output of the multiplexer circuit 151. When the control signal IMC is in the first logic state (for example, logic low - when the circuit 110 is operating in accordance with the conventional memory access mode of operation), the multiplexer circuit 151 selects the data on signal line 132. Conversely, when the control signal IMC is in the second logic state (for example, logic high - when the circuit 110 is operating in accordance with the digital in-memory compute mode of operation), the multiplexer circuit 151 selects the data at the output of the multiplexer circuit 151 (which has been latched by latch circuit 134). The latched data at the output of multiplexer circuit 151 is buffered by buffer circuit 136 and passed to the data output port Q<x>.

A sensing circuit 140(y) of the read logic circuit is coupled to receive the data on the local read bit line RBL_{y}<x> and generate a sensed data bit on signal line 142(y). Here, y = 0 to P-1. As an example, each sensing circuit 140 may comprise a logic NOT gate. The sensed data bit is applied to the second input of a multiplexer circuit 150 whose select input receives the control signal IMC. The first input of the multiplexer circuit 150 is coupled to the output of the multiplexer circuit 150. When the control signal IMC is in the first logic state (for example, logic low - when the circuit 110 is operating in accordance with the conventional memory access mode of operation), the multiplexer circuit 150 selects the data at the output of the multiplexer circuit 150 (which has been latched by latch circuit 144). Conversely, when the control signal IMC is in the second logic state (for example, logic high - when the circuit 110 is operating in accordance with the digital in-memory compute mode of operation), the multiplexer circuit 150 selects the data on signal line 142. The latched data at the output of multiplexer circuit 150 is buffered by buffer circuit 146(y) and passed to the sub-array data output port R_{y}<x>.

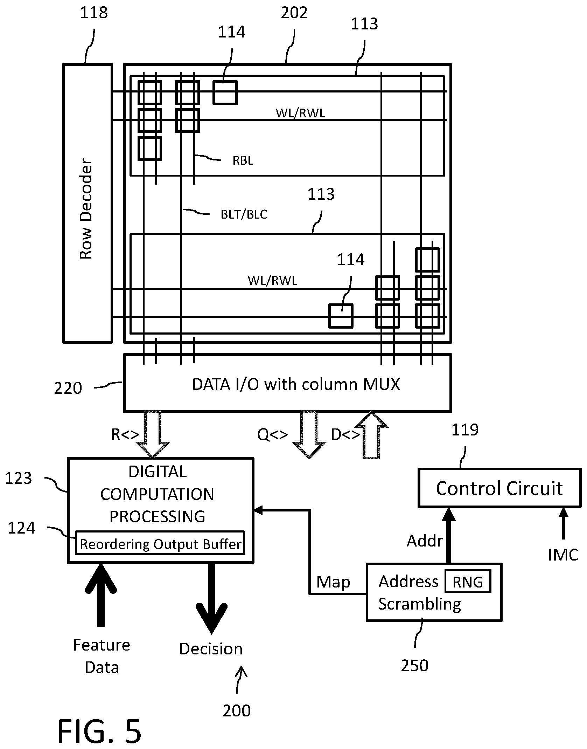

Reference is now made to Figure 5 which shows a block diagram of a system 200 architecture supporting both digital in-memory computation processing and conventional memory access with column multiplexing. The system 200 includes a memory array 202. The memory array 202 stores in-memory computation weight data and/or system data. The memory array 202 is arranged in a manner like that shown with the memory array 112 of Figure 1 to include memory cells 114 arranged in a matrix with the array 112 being segmented into plural sub-arrays 113. The memory cells 114 in a common row of the matrix for the array 202 are connected to each other through a common word line WL and through a common read word line RWL. Each of the word lines (WL and/or RWL) is driven by a word line driver circuit (reference 116, Figure 1) in response to an activation by a row decoder 118. The memory cells 114 in a common column of the matrix for array 202 are connected to each other through a common pair of complementary (write) bit lines BLT and BLC. The memory cells 114 in a common column of each sub-array 113 within the array 202 are connected to each other through a local read bit line RBL.

The local read bit lines RBL from the sub-arrays 113 for each column in the array 202 are coupled, along with the complementary bit lines BLT and BLC for the column in the array 202, to a data input/output (I/O) circuit 220. A data input port (D<>) of the I/O circuit 220 receives input data (user or weight data) to be written to the memory cells 114 in array 202 through the complementary bit lines BLT, BLC in response to assertion of a word line signal in a conventional memory access mode of operation. A data output port (Q<>) of the I/O circuit 220 generates output data read from the memory cells 114 of array 202 through the read bit lines RBL in response to assertion of a read word line signal in the conventional memory access mode of operation. Additionally, the I/O circuit 220 further includes sub-array data output ports R<> to generate output data read from memory cells 114 on the local read bit lines RBL of the sub-arrays 113 of array 202 in response to the simultaneous assertion of a plurality of read word line signals (one per sub-array 113) in a digital in-memory compute mode of operation. A digital computation processing circuit 123 performs digital computations on the output data from the sub-array data output ports R<> as a function of received feature data and generates a decision output for the digital in-memory computation operation.

The data input/output (I/O) circuit 220 is implemented to support read-write of data words with word interleaving based on a column multiplexing factor. This strategy could enable mapping of sub-tensor per row and leveraging the multiplexing index factor for a non-sequential order of sub-tensor processing. In a non-limiting example of this, consider an implementation with a column multiplexing factor of two. Each row of the memory array 202 stores two data words (the number of data words stored per row corresponding to the column multiplexing factor), with the bits of those two data words being interleaved with each other. Thus, in this example, the bits of the first data word stored at a given row would be stored in the memory cells 114 for the even numbered columns of the array 202 and the bits of the second data word stored at that same given row would be stored in the memory cells 114 for the odd numbered columns of the array 202.

The data write operation proceeds as follows:
A first data word comprising input data (user or weight data) is received at the data input port (D<>) of the I/O circuit 220. Using the column multiplexing functionality, the I/O circuit 220 applies the bits of the first data word to the complementary bit lines BLT and BLC for the even columns in the array 202 and writes those bits to the corresponding memory cells 114 at the row selected by the row decoder circuit 118.

A second data word comprising input data (user or weight data) is then received at the data input port (D<>) of the I/O circuit 220. Using the column multiplexing functionality, the I/O circuit 220 applies the bits of the second data word to the complementary bit lines BLT and BLC for the odd columns in the array 202 and writes those bits to the corresponding memory cells 114 at the same row selected by the row decoder circuit 118.

The data read operation proceeds as follows:
The row is selected by the row decoder circuit 118 and, using the column multiplexing functionality, the I/O circuit 220 reads the data for the first data word from the memory cells 114 connected to the read bit lines RBL for the even columns in the array 202. The read first data word is passed through output port (Q<>) of the I/O circuit 220.

Next, using the column multiplexing functionality, the I/O circuit 220 reads the data for the second data word from the memory cells 114 connected to the read bit lines RBL for the odd columns in the array 202. The read second data word is passed through output port (Q<>) of the I/O circuit 220.

The foregoing write and read operations utilizing word interleaving based on a column multiplexing factor are performed in the context of the conventional memory access mode of operation. It is also possible to utilize word interleaving based on the column multiplexing factor during the digital in-memory compute mode of operation. For example, the execution of a given in-memory computation operation may implicate the sequential accessing by addressing of two or more sets of columns of memory cells 114 in the sub-arrays 113. For example, a first computation address Addr=B1 is applied for the in-memory computation operation which is decoded by the row decoder circuit 118 to selectively actuate one read word line RWL (for example, for the first row) in each sub-array 113 with a word line signal pulse and through the column multiplexing function receive data words D=< > stored by memory cells in the even columns in the array 202, which would be passed by the column I/O circuit 220 from the read (even) bit lines RBL for output at the corresponding sub-array data output ports R. The digital computation processing circuit 123 then stores those read data words. A second computation address Addr=B2 is then applied for that same in-memory computation operation which is decoded by the row decoder circuit 118 to selectively actuate the same read word line RWL (for example, for the first row) in each sub-array 113 with a word line signal pulse and through the column multiplexing function receive data words D=< > stored by memory cells in the odd columns in the array 202, which would be passed by the column I/O circuit 220 from the read (odd) bit lines RBL for output at the corresponding sub-array data output ports R. The digital computation processing circuit 123 then stores those read data words. A digital computation is the performed by the digital computation processing circuit 123 on the stored output read data words D=< > from the two sequential memory access operations for computation addresses B1 and B2 as a function of received feature data in order to generate the decision output for the digital in-memory computation operation.

It will be noted that the implementation described above with a column multiplexing factor of two is just an example. The I/O circuit 220 for the array 202 may be configured to support any desired column multiplexing factor, an example of such being a MUX factor equal to a power of 2, such as 2, 4, 8 or 16 depending on considerations of array size. The selection of the MUX factor may also, or alternatively, be made dependent on the data processing application.

It is recognized that a mostly stationary approach to computational weight data storage is typically implemented for the memory 202 (112). Because of this, the stored computational weight data is static over prolonged periods of time during operation. This makes the stored computational weight data more susceptible to side channel attack extraction, especially in the context of fixed sequential address accessing of the memory to read the stored computational weight data during execution of the in-memory computation operation.

To address the foregoing concern and provide an effective impediment against side channel attack extraction of the proprietary computational weight data, the circuit 200 implements a randomized memory addressing process during execution of the in-memory computation operation. The sequence for column address accessing is randomly scrambled for each in-memory computation operation by an address scrambling circuit 250. Information about the address scrambling is provided in a signal (Map) to the digital computation processing circuit 123 so that the computational weight data that is read from each multiplexed set of columns of the sub-arrays 113 can be properly mapped to the feature data when performed the digital computation to generate the decision output for the digital in-memory computation operation.

Consider again the execution of an in-memory computation operation that implicates the sequential accessing by addressing of two or more sets of columns of memory cells 114 of the sub-arrays 113. The address scrambling circuit 250 operates to randomize the order of address accessing for the execution of that in-memory computation operation. In the example provided above, the (normal or typical) fixed sequential order for accessing by addressing would be application of the first computation address Addr=B1 - which accesses by column multiplexing the even columns of the array 202 - followed by the application of the second computation address Addr=B2 - which accesses by column multiplexing the odd columns of the array 202. However, the address scrambling circuit 250 would instead randomize the order of sequential addressing for each instance of execution of an in-memory computation operation. The randomized order may, for example, be specified by the output of a random number generator (RNG) circuit.

To better understand the foregoing, consideration is made of a more complicated example. In this example, execution of the in-memory computation operation requires the accessing a column MUX=4 array 200 by addressing of four different sets of columns of memory cells 114 in the sub-arrays 113. Those four sets of columns are associated, respectively, with four computation addresses Addr=C1, C2, C3 and C4. For each execution of that in-memory computation operation, the address scrambling circuit 250 will generate a randomize sequential order of memory access based on the output of the RNG circuit. For example, for one instance of the in-memory computation operation execution, the sequential order of addresses applied to the control circuit 119 by the address scrambling circuit 250 would be, for example, C2, C1, C4, C3 based on one random number output by the RNG circuit. In another instance, based on another random number output by the RNG circuit, the address scrambling circuit 250 would specify the sequential order of addresses applied to the control circuit 119 as, for example, C4, C2, C3, C1. For yet another instance of in-memory computation operation execution, the randomized sequential order of addresses applied to the control circuit 119 by the address scrambling circuit 250 would be, for example, C3, C2, C1, C4 based on yet another random number output by the RNG circuit.

The effect of the foregoing randomize scrambling of the sequential order of addresses for column access in the in-memory computation operation execution is to obfuscate the progression of column selection during execution. This results in a dynamic, non-stationary pattern of memory access to the proprietary computational weight data that enhances data security by making it more difficult to use a side channel attack.

Information concerning the particular randomized sequential order of addresses applied to the control circuit 119 by the address scrambling circuit 250 is output by the address scrambling circuit 250 via the Map signal. Using the data in the Map signal (which is indicative of the randomized sequential order of addresses applied to the control circuit 119), the digital computation processing circuit 123 is provided with knowledge of the order with which the computational weight data is being read from the memory for execution of that in-memory computation operation. Using the Map signal provided information, the digital computation processing circuit 123 can operate to properly map the read computational weight data from each accessed set of columns of the sub-arrays 113 to the corresponding feature data when performing the digital computation operation which produces the decision output for the digital in-memory computation operation. In the context of the foregoing example, the feature data FD1, FD2, FD3, FD4 can be respectively applied to the computational weight data read from the memory at the corresponding computation addresses Addr=C1, C2, C3 and C4, notwithstanding the fact that the computational weight data was accessed and read from the memory in a different sequential order (for example, with column access sequences C4, C2, C3, C1 or C2, C1, C4, C3) based on the randomized column access technique applied by the address scrambling circuit 250.

The digital computation processing circuit 123 can thus use the information from the Map signal, along with the operation of the reordering output buffer 124, to provide an output indexing mechanism that descrambles the sequential order with which the computational weight data has been read from the columns of the memory for processing in the computational pipeline. This ensures that the final output maintains it reduced dimensionality while being correctly tagged. This allows subsequent data flow computations to remain unaffected by the randomized sequential order of addressing specified by the circuit 150.

The use of non-overlapping scrambling techniques for addressing the memory across multiple high-cardinality components not only increases the robustness and security of the system, but also adds an extra layer of complexity to the processing operation which safeguards against predictable patterns that could be exploited in a side channel attack.

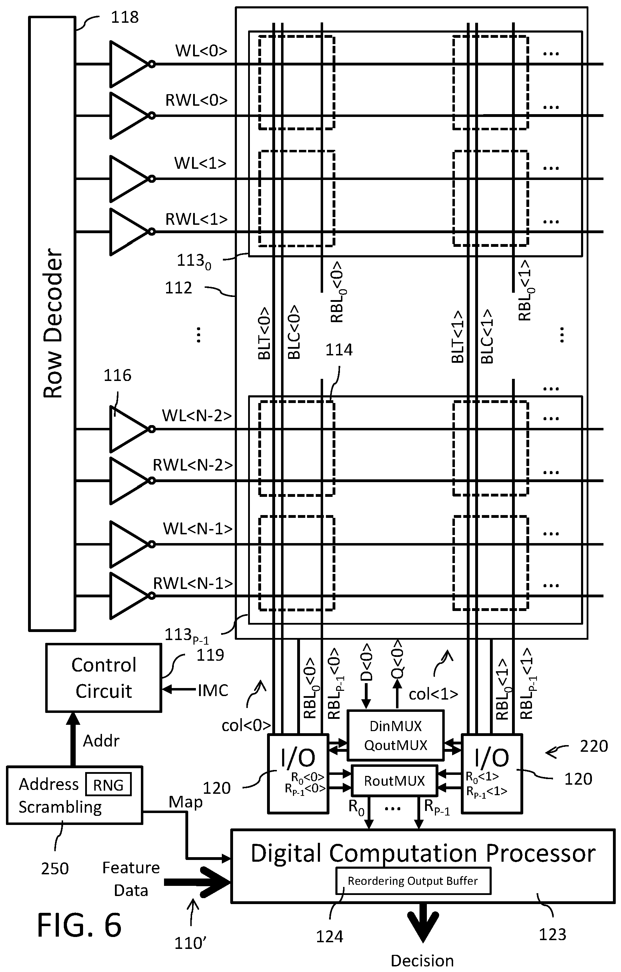

Reference is now made to Figure 6 showing a circuit 110' supporting both conventional memory access processing and digital in-memory computation processing. Like references in Figures 1 and 6 refer to same or similar components, the description of which will not necessarily be repeated for the sake of brevity. The circuit 110' of Figure 6 differs from the circuit 110 of Figure 1 primarily in terms of illustrating details for implementing read-write of data words with word interleaving based on a column multiplexing factor. In particular, Figure 6 shows implementation with a column multiplexing factor equal to two (wherein this MUX factor = 2 is just by example it being understood that higher factors could instead be implemented depending on system need). A simplification of the array 112, corresponding for example to the array 202 of Figure 5, shows one even column (referenced as col<0>) and one odd column (referenced as col<1>) associated with a single bit (here bit <0>) of the data input D and data output Q in the conventional memory access mode of operation. These columns col<0> and col<1> are adjacent to each other in the array 112, 202. The array 112, 202 would, of course, include a number of even-odd pairs of columns configured in the same manner as the illustrated even-odd pair of columns.

Each column of the array 112, 202 includes an input/output circuit 120.

A data input port (D) for the column MUX=2 columns col<0> and col<1> is selectively connected through a data input column multiplexer DinMUX to an internal data input path of each of the corresponding column I/O circuits 120. A bit of the input data (user or weight data) of a data word received at the data input port D can be routed by the data input column multiplexer DinMUX to the column I/O circuit 120 for the column col<0> when the data word write in the conventional memory access mode of operation is writing the data word to the complementary bit lines BLT and BLC for the even columns in the array 112, 202. Alternatively, the bit of the input data (user or weight data) of the data word received at the data input port D can be routed by the data input column multiplexer DinMUX to the column I/O circuit 120 for the column col<1> when the data word write in the conventional memory access mode of operation is writing the data word to the complementary bit lines BLT and BLC for the odd columns in the array 112, 202.

A data output port (Q) for the column MUX=2 columns col<0> and col<1> is selectively connected through a data output column multiplexer QoutMUX to an internal data output path of each of the corresponding column I/O circuits 120. A bit of the output data (user or weight data) of a data word read by the column I/O circuit 120 for the column col<0> can be routed by the data output column multiplexer QoutMUX to the data output port Q when the data word read in the conventional memory access mode of operation is reading the data word from the read bit lines RBL for the even columns in the array 112, 202. Alternatively, the bit of the output data (user or weight data) of the data word read by the column I/O circuit 120 for the column col<1> can be routed by the data output column multiplexer QoutMUX to the data output port Q when the data word read in the conventional memory access mode of operation is reading the data word from the read bit lines RBL for the odd columns in the array 112, 202.

The sub-array data output ports R₀<0> to R_{P-1}<0> and sub-array data output ports R₀<1> to R_{P-1}<1> for the column MUX=2 columns col<0> and col<1> are selectively connected through a read output column multiplexer RoutMUX to corresponding read sub-array output ports R₀ to R_{P-1}. The bits of weight data of the data words read by the column I/O circuit 120 for the column col<0> can be routed by the read output column multiplexer RoutMUX to the read output port R when the data words are being read in the in-memory computation mode of operation from the read bit lines RBL for the even columns in the array 112, 202. Alternatively, the bits of weight data of the data words read by the column I/O circuit 120 for the column col<1> can be routed by the read output column multiplexer RoutMUX to the read output port R when the data words are being read in the in-memory computation mode of operation from the read bit lines RBL for the odd columns in the array 112, 202.

The included data input column multiplexers DinMUX form a column write multiplexing circuit that is coupled to the internal data input paths (i.e., the column data inputs) of the input/output circuits 120 for the first set of columns of the memory array (for example, the even columns) to input data bits in the conventional memory access mode (write) for the first data word stored at the given row of the array 112, and coupled to the internal data input paths (i.e., the column data inputs) of the input/output circuits 120 for the second set of columns of the memory array (for example, the odd columns) to input data bits in the conventional memory access mode (write) for the second data word stored at the given row of the array 112.

The included data output column multiplexers QoutMUX form a column read multiplexing circuit that is coupled to the internal data output paths (i.e., the column data outputs) of the input/output circuits 120 for a first set of columns of the memory array (for example, the even columns) to output data bits in the conventional memory access mode (read) for a first data word stored at a given row of the array 112, and coupled to the internal data output paths (i.e., the column data outputs) of the input/output circuits 120 for a second set of columns of the memory array (for example, the odd columns) to output data bits in the conventional memory access mode (read) for a second data word stored at that given row of the array 112.

The included read output column multiplexers RoutMUX form a further column read multiplexing circuit that is coupled to the read bit lines RBL through the input/output circuits 120 for a first set of columns of the memory array (for example, the even columns) to output weight data bits in the in-memory computation mode for data words stored at one row per sub-array 113, and coupled to the read bit lines RBL through the input/output circuits 120 for a second set of columns of the memory array (for example, the odd columns) to output weight data bits in the in-memory computation mode for data words stored at one row per sub-array 113.

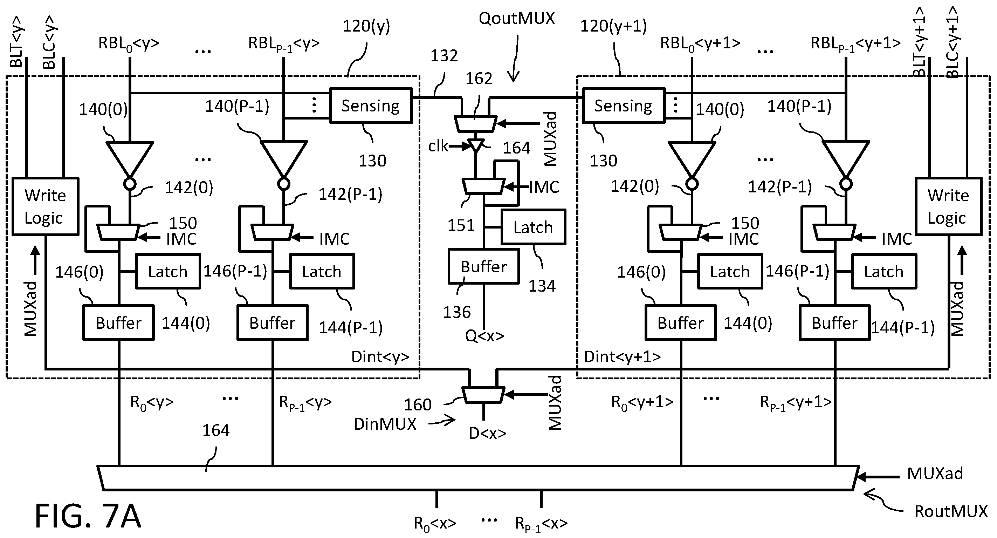

A block diagram of an embodiment for the data input/output (I/O) circuit 220 is shown in Figure 7A. The circuit 220 includes a plurality of column I/O circuits 120. Each column I/O circuit 120(y) is coupled to the pair of complementary bit lines BLT<y>, BLC<y> for the column y in the array 112. The bit at an internal data input path Dint<y> is coupled through a write logic circuit to drive the pair of complementary bit lines. The column I/O circuit 120(y) is also coupled to the P local read bit lines RBL₀<y> to RBL_{P-1}<y> from the sub-arrays 113 for the column y in the array 112 through a read logic circuit.

A sensing circuit 130 of the read logic circuit is coupled to receive the data on the P local read bit lines RBL₀<y> to RBL_{P-1}<y> and generate a sensed data bit on signal line 132. As an example, the sensing circuit 130 may comprise a logic NAND gate.

A sensing circuit 140(z) of the read logic circuit is coupled to receive the data on the local read bit line RBL_{z}<y> and generate a sensed data bit on signal line 142(z). Here, z = 0 to P-1. As an example, each sensing circuit 140 may comprise a logic NOT gate, for example, or a sense amplifier. The sensed data bit is applied to the second input of a multiplexer circuit 150 whose select input receives the control signal IMC. The first input of the multiplexer circuit 150 is coupled to the output of the multiplexer circuit 150. The data at the output of multiplexer circuit 150 is latched by latch circuit 144(z) and buffered by buffer circuit 146(z) for output at the sub-array data output port R_{z}<y>. When the control signal IMC is in the first logic state (for example, logic low - when the circuit 110' is operating in accordance with the conventional memory access mode of operation), the multiplexer circuit 150 selects the data at the output of the multiplexer circuit 150 (i.e., the data held by the latch 144). Conversely, when the control signal IMC is in the second logic state (for example, logic high - when the circuit 110' is operating in accordance with the digital in-memory compute mode of operation), the multiplexer circuit 150 selects the data on signal line 142.

To support read-write of data words with word interleaving based on a column multiplexing factor, the data input/output (I/O) circuit 220 further includes a data input column multiplexer DinMUX, a data output column multiplexer QoutMUX and a read output column multiplexer RoutMUX. Figure 7A illustrates the configuration for the data input column multiplexer DinMUX, data output column multiplexer QoutMUX and read output column multiplexer RoutMUX coupled to plural column I/O circuit 120 for the example implementation with a column multiplexing factor equal to two. Again, the column MUX=2 implementation is just an example, and those skilled in the art will understand how to extend this to other column multiplexing factors.

The data input column multiplexer DinMUX includes a multiplexing circuit 160 having an input coupled to receive bit <x> of the input data word, a first output coupled to the internal data input path Dint<y> for the column I/O circuit 120<y> coupled through the write logic to the complementary bit lines BLT<y>, BLC<y> for the even column, and a second output coupled to the internal data input path Dint<y+1 > for the column I/O circuit 120<y+1> coupled through the write logic to the complementary bit lines BLT<y+1>, BLC<y+1> for the odd column. The select input of the multiplexing circuit 160 receives an address control signal MUXad that is generated in response to decoding of the address for the memory access (read-write) operation in the conventional memory access mode of operation to select either the even columns or the odd columns. This signal, in addition to providing MUX control, is also used to gate the write logic circuits for the unselected MUX path; as a result the BLT/BLC lines on the unselected paths (for example, columns) are left in a floating condition or a tied to a default state.

The data output column multiplexer QoutMUX includes a multiplexing circuit 162 having a first input coupled to receive the sensed data bit on signal line 132 output by the sensing circuit 130 of the column I/O circuit 120<y> coupled to the local read bit lines RBL₀<y> to RBL_{P-1}<y> for the even column, a second input coupled to receive the sensed data bit on signal line 132 output by the sensing circuit 130 of the column I/O circuit 120<y+1> coupled to the local read bit lines RBL₀<y+1> to RBL_{P-1}<y+1> for the odd column, and an output. The select input of the multiplexing circuit 162 receives the address control signal MUXad that is generated in response to decoding of the address for the memory access (read-write) operation in the conventional memory access mode of operation to select either the even columns or the odd columns. The sensed data bit selected by the multiplexing circuit 162 for output is applied through a gating circuit 164 to the first input of a multiplexer circuit 151. The gating circuit 164 is controlled to pass the sensed data bit in response to assertion of a sense clock signal clk. The second input of the multiplexer circuit 151 is coupled to the output of the multiplexer circuit 151. The select input of the multiplexer circuit 151 receives the control signal IMC. The data at the output of multiplexer circuit 151 is latched by latch circuit 134 and buffered by buffer circuit 136 for output at the data output port Q<x>. When the control signal IMC is in the first logic state (for example, logic low - when the circuit 110' is operating in accordance with the conventional memory access mode of operation), the multiplexer circuit 151 selects the data on signal line 132. Conversely, when the control signal IMC is in the second logic state (for example, logic high - when the circuit 110' is operating in accordance with the digital in-memory compute mode of operation), the multiplexer circuit 151 selects the data at the output of the multiplexer circuit 151 (i.e., the data held by the latch 134).

The read sub-array output column multiplexer RoutMUX includes a multiplexing circuit 164 having a first set of inputs coupled to receive data bits from the sub-array data output ports R₀<y> to R_{P-1}<y> of the column I/O circuit 120<y> for the even column, a second set of inputs coupled to receive data bits from the sub-array data output ports R₀<y+1> to R_{P-1}<y+1> of the column I/O circuit 120<y+1> for the odd column, and a set of outputs for outputting the selected bits for the read data output ports R₀<x> to R_{P-1}<x>. The select input of the multiplexing circuit 164 receives the address control signal MUXad that is generated in response to decoding of the address for the memory access (read-write) operation in the in-memory computation mode of operation to select either the even columns or the odd columns.

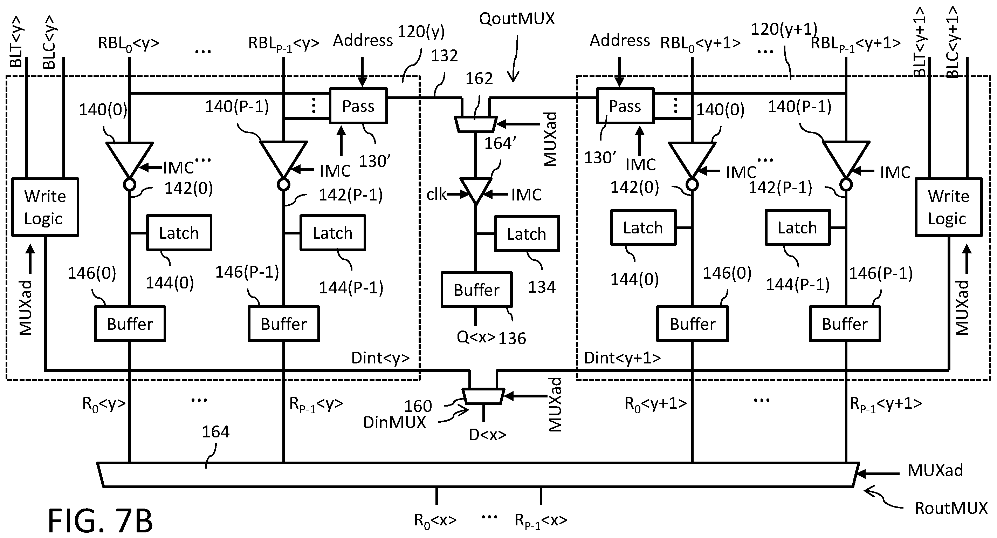

A block diagram of an alternative embodiment for the data input/output (I/O) circuit 220 is shown in Figure 7B. Like references in Figures 7A and 7B refer to same or similar components. The embodiment of Figure 7B differs from the embodiment of Figure 7A in the following ways.

The multiplexer circuit 150 is omitted, with the output of the sensing circuit 140 coupled directly to the latch 144 and buffer 146. The sensing circuit 140 is implemented with a circuit supporting a selectable tri-stated output node, where the tri-stated condition is controlled by the logic state of the control signal IMC.

The sensing circuit 130 is replaced with a pass through circuit 130'. The circuit 130' is coupled to receive the data on the P local read bit lines RBL0<y> to RBLP-1<y>, and selectively pass (dependent on the applied address (Address)) one of the signals on the P local read bit lines RBL0<y> to RBLP-1<y> for output to signal line 132. Additionally, the pass through function performed by circuit 130' may be selectively controlled by the logic state of the control signal IMC. For example, pass through of the data from the selected one of the P local read bit lines RBL0<y> to RBLP-1<y> to line 132 may occur only when the control signal IMC is in the second logic state (for example, logic high - when the circuit 110' is operating in accordance with the digital in-memory compute mode of operation).

The gating circuit 164 is implemented to include a sensing circuit 164' functionality in addition to the clock controlled gating. The sensing circuit 164' is implemented with a circuit supporting a selectable tri-stated output node, where the tri-stated condition is controlled by the logic state of the control signal IMC.

Lastly, the multiplexer circuit 151 is omitted, with the output of the sensing circuit 164' coupled directly to the latch 134 and buffer 136.

Operation of the data input/output (I/O) circuit 220 as shown in Figure 6B is similar to that described above with respect to the embodiment of Figure 6A. With respect to the operation of the sensing circuit 140, when the control signal IMC is in the first logic state (for example, logic low - when the circuit 110' is operating in accordance with the conventional memory access mode of operation), the sensing circuit 140 will have its output node controlled in the tristated condition. Conversely, when the control signal IMC is in the second logic state (for example, logic high - when the circuit 110' is operating in accordance with the digital in-memory compute mode of operation), the output of the sensing circuit 140 is enabled to drive the inputs of the latch 144 and buffer 146 with the sensed data.

With respect to the operation of the sensing circuit 164', when the control signal IMC is in the first logic state (for example, logic low - when the circuit 110' is operating in accordance with the conventional memory access mode of operation), the output of the sensing circuit 164' is enabled to drive the inputs of the latch 134 and buffer 136 with the sensed data. Conversely, when the control signal IMC is in the second logic state (for example, logic high - when the circuit 110' is operating in accordance with the digital in-memory compute mode of operation), the sensing circuit 164' will have its output node controlled in the tristated condition.

It will also be noted that the clock for each of the latch circuits 134, 144 can be selectively gated dependent on the logic state of the control signal IMC. For example, the clock for latch circuit 134 is gated through when the control signal IMC is in the second logic state (for example, logic high - when the circuit 110' is operating in accordance with the digital in-memory compute mode of operation), and the clock for latch circuit 144 is gated through when the control signal IMC is in the first logic state (for example, logic low - when the circuit 110' is operating in accordance with the conventional memory access mode of operation).

It will be further noted that the scheme for using a randomized sequence of row addressing (as described in connection with Figure 1) and the scheme for using a randomized sequence of column addressing (as described in connection with Figures 5-6) may be utilized in combination with each other. In effect, this would comprise a circuit which is the combination of the circuits shown in Figures 1, 5 and 6. As an example, the weight data access operations may be sequentially implemented with a certain set of columns being randomly selected by circuit 250 and then randomized row access is performed by circuit 250 with respect to that set of columns. The next set of columns is then randomly selected by circuit 250 and the randomized row access is again performed by circuit 250. This is repeated until all necessary weight data has been accessed and read from the memory for use in performing the processing operation using the feature data. Conversely, the weight data access operations may be sequentially implemented with a certain row being randomly selected by circuit 250 and then randomized set of columns access is performed by circuit 250 with respect to that row. The next row is then randomly selected by circuit 250 and the randomized column access is again performed by circuit 250. **In** any case, the information contained in the Map signal will permit the processing circuit 123 track the order of weight data read from the memory in order to properly map the read data to the corresponding feature data. Again, this is repeated until all necessary weight data has been accessed and read from the memory for use in performing the processing operation using the feature data.

United States Patent Application Publication No. 2024/0071439 is incorporated herein by reference.

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention as defined in the appended claims.

## Claims

1. A circuit, comprising:
a memory array including a plurality of memory cells arranged in a matrix with plural rows and plural columns, each row including at least one word line connected to memory cells in the row, and each column including at least one bit line connected to memory cells in the column;
wherein the memory cells store computational weight data for an in-memory computation operation;
an input/output circuit for each column comprising a read circuit configured to read the computational weight data from memory cells in the memory array during execution of the in-memory computation operation;
an address scrambling circuit configured to randomly scramble an order of addresses used for accessing the memory array to retrieve the computational weight data for the in-memory computation operation from the memory cells; and
a digital computation processing circuit configured to receive feature data for the in-memory computation operation and perform a computational operation as a function of the feature data and the retrieved computational weight data.

2. The circuit of claim 1, wherein the address scrambling circuit is further configured to generate a map signal providing information specifying the randomly scrambled order of addresses, and wherein the digital computation processing circuit is configured to use the information specifying the randomly scrambled order of addresses from the map signal to map the retrieved computational weight data to the feature data when performing the computational operation for the in-memory computation operation.

3. The circuit of claim 2, further comprising a reordering output buffer operating in response to the map signal to store retrieved computational weight data in an order for mapping to the feature data.

4. The circuit of claim 1, wherein the addresses specify rows of the memory array to be accessed for the in-memory computation operation, and the randomly scrambled order of addresses effectuates a random scrambling of row access to the memory array.

5. The circuit of claim 4, wherein:
the memory array comprises a plurality of sub-arrays, wherein each sub-array includes memory cells arranged in a matrix with plural rows and plural columns, each sub-array row connected to the word line for memory cells in the row, and each sub-array column including a local bit line connected to the memory cells of the sub-array column; and
each address specifies one sub-array row per sub-array to be accessed for the in-memory computation operation.

6. The circuit of claim 4, wherein the address scrambling circuit is further configured to generate a map signal providing information specifying the randomly scrambled order of row access to the memory array, and wherein the digital computation processing circuit is configured to use the information specifying the randomly scrambled order of row access to the memory array from the map signal to map the retrieved computational weight data from the addressed rows to the feature data when performing the computational operation for the in-memory computation operation.

7. The circuit of claim 1, wherein the addresses specify columns of the memory array to be accessed for the in-memory computation operation, and the randomly scrambled order of addresses effectuates a random scrambling of column access to the memory array.

8. The circuit of claim 7, wherein:
the memory array includes a plurality of sets of columns;
the input/output circuit supports column multiplexing access amongst the plurality of sets of columns; and
each address specifies one set of columns to be accessed for the in-memory computation operation.

9. The circuit of claim 7, wherein the address scrambling circuit is further configured to generate a map signal providing information specifying the randomly scrambled order of column access to the memory array, and wherein the digital computation processing circuit is configured to use the information specifying the randomly scrambled order of column access to the memory array from the map signal to map the retrieved computational weight data from the addressed columns to the feature data when performing the computational operation for the in-memory computation operation.

10. The circuit of claim 1, wherein the address scrambling circuit randomly scrambles the order of addresses in response to an output from a random number generator circuit.

11. The circuit of claim 1, wherein each memory cell is a static random access memory (SRAM) cell or other logic bitcell.

12. The circuit of claim 11, wherein the SRAM cell is one of a 6T-type cell or an 8T-type cell.

13. The circuit of claim 1, wherein the in-memory computation operation is a digital in-memory computation.

14. A method, comprising:
storing computational weight data for an in-memory computation operation in a memory array including a plurality of memory cells arranged in a matrix with plural rows and plural columns, each row including at least one word line connected to memory cells in the row, and each column including at least one bit line connected to memory cells in the column;
reading the computational weight data from memory cells in the memory array during execution of the in-memory computation operation;
wherein reading comprises addressing the memory array;
wherein addressing comprises randomly scrambling an order of addresses used for accessing the memory array to retrieve the computational weight data for the in-memory computation operation from the memory cells; and
performing a digital computational operation as a function of feature data for the in-memory computation operation and the retrieved computational weight data.

15. The method of claim 14, further comprising generating a map signal providing information specifying the randomly scrambled order of addresses, and wherein the digital computation operation is configured to use the information specifying the randomly scrambled order of addresses from the map signal to map the retrieved computational weight data to the feature data.

16. The method of claim 15, further comprising reordering the retrieved computational weight data in an output buffer in response to the map signal to store retrieved computational weight data in an order for mapping to the feature data.

17. The method of claim 14, wherein the addresses specify rows of the memory array to be accessed for the in-memory computation operation, and the randomly scrambled order of addresses effectuates a random scrambling of row access to the memory array.

18. The method of claim 17, further comprising generating a map signal providing information specifying the randomly scrambled order of row access to the memory array, and wherein the digital computation operation is configured to use the information specifying the randomly scrambled order of row access to the memory array from the map signal to map the retrieved computational weight data from the addressed rows to the feature data.

19. The method of claim 14, wherein the addresses specify columns of the memory array to be accessed for the in-memory computation operation, and the randomly scrambled order of addresses effectuates a random scrambling of column access to the memory array.

20. The method of claim 19, further comprising generating a map signal providing information specifying the randomly scrambled order of column access to the memory array, and wherein the digital computation operation is configured to use the information specifying the randomly scrambled order of column access to the memory array from the map signal to map the retrieved computational weight data from the addressed columns to the feature data.

21. The method of claim 14, wherein randomly scrambling the order of addresses is performed in response to an output from a random number generator circuit.

22. The method of claim 14, wherein each memory cell is a static random access memory (SRAM) cell or other logic bitcell.

23. The method of claim 22, wherein the SRAM cell is one of a 6T-type cell or an 8T-type cell.

24. The method of claim 14, wherein the in-memory computation operation is a digital in-memory computation.
